# EUROPÄISCHE PATENTSCHRIFT

(11) **EP 4 126 736 B1**
(45) Veröffentlichungstag und Bekanntmachung des Hinweises auf die Patenterteilung: **15.05.2024**
(21) Anmeldenummer: 21713978.1
(22) Anmeldetag: 25.03.2021
(51) Int. Cl.: B66B 19/00, B66B 7/02, F16B 37/00, F16B 13/00, F16B 37/04

(54) **POSITIONIERHILFE ZUM POSITIONIEREN EINER MUTTER AN EINER FÜHRUNGSSCHIENE EINER AUFZUGSANLAGE**
POSITIONING AID FOR POSITIONING A NUT ON A GUIDE RAIL OF AN ELEVATOR SYSTEM
AIDE AU POSITIONNEMENT PERMETTANT DE POSITIONNER UN ÉCROU SUR UN RAIL DE GUIDAGE D'UNE INSTALLATION D'ASCENSEUR

(30) Priorität: 30.03.2020 EP 20166706
(43) Veröffentlichungstag der Anmeldung: 08.02.2023
(73) Patentinhaber: INVENTIO AG, 6052 Hergiswil (CH)
(72) Erfinder: D'APICE, Alessandro, 6030 Ebikon (CH); LO JACONO, Romeo, 6929 Gravesano (CH); MÖRI, Peter, 6023 Rothenburg (CH); URBEN, Andreas, 6006 Luzern (CH)
(74) Vertreter: Inventio AG
(86) Internationale Anmeldenummer: PCT/EP2021/057834
(87) Internationale Veröffentlichungsnummer: WO 2021/198039

(56) Entgegenhaltungen:
- WO-A1-2011/117457
- DE-U- 1 941 526
- US-B1- 6 270 281

## Beschreibung

Die vorliegende Erfindung betrifft eine Positionierhilfe zum Positionieren einer Mutter an einer Führungsschiene einer Aufzugsanlage, ein Führungsschienensystem für eine Aufzugsanlage und eine Aufzugsanlage mit einem solchen Führungsschienensystem.

Eine Aufzugsanlage wie etwa ein Personen- oder Lastaufzug umfasst in der Regel ein Führungsschienensystem aus mehreren Führungsschienen zum Führen eines Fahrkorbs entlang eines Aufzugsschachts. An einer Seitenwand des Aufzugsschachts können mehrere Führungsschienenhalter befestigt sein, etwa in Form von Befestigungswinkeln, mit denen die Führungsschienen verschraubt werden können. Die Führungsschienenhalter können beispielsweise an in der Seitenwand verankerten C-Profilschienen befestigt sein.

Üblicherweise werden bei der Montage des Führungsschienensystems im Aufzugsschacht mehrere kürzere Führungsschienen zu einer längeren Führungsschiene miteinander kombiniert. Dabei können die Führungsschienen als Hohlschienen ausgeführt sein. Um die Verschraubung der Hohlschienen mit den Führungsschienenhaltern zu erleichtern, können die Hohlschienen eine Mehrzahl von Langlöchern aufweisen.

In WO 2011/117457 A1 wird beispielsweise eine Führungsschiene mit einem länglichen Metallprofil beschrieben. Das Metallprofil weist eine Mehrzahl schlitzförmiger Aussparungen auf, in die Schrauben mit ihren jeweiligen Schraubenköpfen eingehängt werden können. Auf die aus dem Metallprofil herausragenden Gewinde der Schrauben können dann Muttern aufgeschraubt werden.

Es kann unter anderem ein Bedarf daran bestehen, die Befestigung bzw. das Befestigen einer Führungsschiene an einem Führungsschienenhalter zu vereinfachen. Insbesondere kann ein Bedarf daran bestehen, eine Positionierhilfe zu schaffen, die es ermöglicht, Muttern schnell und komfortabel von aussen in eine Hohlschiene der Führungsschiene einzubringen, in eine bestimmte Position zu bringen und in dieser Position zu halten.

Ferner kann ein Bedarf an einem entsprechend ausgestatteten Führungsschienensystem und einer damit versehenen Aufzugsanlage bestehen.

Diesem Bedarf kann durch eine Positionierhilfe, ein Führungsschienensystem und eine Aufzugsanlage gemäss den unabhängigen Ansprüchen entsprochen werden. Vorteilhafte Ausführungsformen sind in den abhängigen Ansprüchen sowie der nachfolgenden Beschreibung definiert.

Ein erster Aspekt der Erfindung betrifft ein Positioniersystem zum Positionieren einer Mutter an einer Führungsschiene einer Aufzugsanlage, wobei die Führungsschiene als Hohlschiene ausgeformt ist, wobei die Hohlschiene zur Befestigung an einem Führungsschienenhalter eine Mehrzahl von in Längsrichtung der Hohlschiene hintereinander angeordneten Langlöchern aufweist. Die Positionierhilfe umfasst einen länglichen Befestigungsabschnitt, an dem mindestens eine Mutter befestigt ist und der so dimensioniert ist, dass er mitsamt der mindestens einen Mutter durch eines der Langlöcher hindurchgeführt und innerhalb der Hohlschiene bewegt werden kann. Des Weiteren umfasst die Positionierhilfe einen Halteabschnitt zum Halten des Befestigungsabschnitts, wobei der Halteabschnitt an einem Ende des Befestigungsabschnitts befestigt ist und breiter als das Langloch ausgeführt ist.

Der Führungsschienenhalter, der beispielsweise als ein Befestigungswinkel oder eine Konsole ausgeführt sein kann, kann beispielsweise an einer Wand eines Aufzugsschachts oder an seiner sonstigen tragenden Gebäudestruktur befestigt sein.

Die Führungsschiene kann eine Führungsseite mit einer definierten Führungsfläche zum Führen einer Aufzugskabine, d. h. eines Fahrkorbs, und eine Montageseite zum Montieren der Führungsschiene im Aufzugsschacht umfassen. Die Langlöcher können an der Montageseite angeordnet sein. Beispielsweise kann die Führungsschiene an der Montageseite auch zwei oder mehr als zwei parallele Reihen von Langlöchern aufweisen.

Die Hohlschiene kann ein geschlossenes oder halboffenes Metallprofil sein. Die Führungsschiene kann über ihre gesamte Länge als Hohlschiene ausgeformt sein. Alternativ kann die Führungsschiene in ihrer Längsrichtung auch nur abschnittsweise als Hohlschiene ausgeformt sein.

Eine jeweilige Längsachse der Langlöcher kann parallel zu einer Längsachse der Hohlschiene ausgerichtet sein. Die Längsachse der Hohlschiene kann parallel zu einer Längsachse der Führungsschiene ausgerichtet sein.

Der Befestigungsabschnitt der Positionierhilfe kann beispielsweise streifenförmig ausgestaltet sein. Beispielsweise kann die Mutter an einem ersten Ende oder einem ersten Endabschnitt des Befestigungsabschnitts angeordnet sein. Der Halteabschnitt kann hingegen an einem zweiten Ende oder zweiten Endabschnitt des Befestigungsabschnitts angeordnet sein. Ein Abstand zwischen der Mutter und dem Halteabschnitt in Längsrichtung der Positionierhilfe kann zweckmässigerweise abhängig von einer gegebenen Länge der Langlöcher und/oder einem gegebenen Abstand zwischen zwei Langlöchern in der Hohlschiene gewählt sein.

Je nach Position des Führungsschienenhalters relativ zur Hohlschiene, genauer je nach Position eines Schraubenlochs im Führungsschienenhalter relativ zu den Langlöchern in der Hohlschiene, kann der Befestigungsabschnitt beispielsweise über ein erstes Langloch in die Hohlschiene eingeführt werden und so platziert werden, dass die Mutter einem zweiten Langloch, etwa einem benachbarten Langloch, gegenüberliegt.

Der Befestigungsabschnitt kann breiter und/oder länger als die Langlöcher sein. Anders ausgedrückt kann der Befestigungsabschnitt im montierten Zustand der Positionierhilfe in mindestens einer Achsenrichtung beidseitig über einen Rand eines oder mehrerer Langlöcher hinausragen. Somit bildet der Befestigungsabschnitt zwischen der Mutter und der Hohlschiene eine Auflage zum Aufnehmen einer axialen Gewindekraft, die beispielsweise von einer in die Mutter eingeschraubten Schraube auf die Mutter ausgeübt werden kann.

Unter einer Mutter kann im Allgemeinen ein Verbindungselement mit einem Innengewinde zum Aufnehmen eines entsprechenden Aussengewindes, etwa eines Bolzens oder einer Schraube, verstanden werden. Die Mutter kann beispielsweise ein Gewindeeinsatz sein, der in eine entsprechende Aussparung des Befestigungsabschnitts eingesetzt, beispielsweise eingepresst ist. Die Mutter kann aber auch als eine Gewindebohrung in dem Befestigungsabschnitt ausgeführt sein, sofern der Befestigungsabschnitt eine ausreichende Dicke und Festigkeit aufweist. Zusätzlich oder alternativ kann die Mutter mit dem Befestigungsabschnitt stoffschlüssig verbunden, beispielsweise damit verschweisst, verlötet und/oder verklebt sein.

Der Halteabschnitt kann als ein verdickter Kopf der Positionierhilfe aufgefasst werden, etwa in Form eines laschen-, ring- oder scheibenförmigen Elements, das einerseits zum einfachen Handhaben der Positionierhilfe dient, andererseits verhindert, dass die Positionierhilfe in die Hohlschiene fällt, etwa wenn die Positionierhilfe versehentlich losgelassen wird. Beispielsweise kann der Halteabschnitt so ausgeformt sein, dass er mit Daumen und Zeigefinger gehalten werden kann. Zudem kann der Halteabschnitt als eine Art Haken oder Anschlag ausgeformt sein. Dies kann sehr einfach dadurch erreicht werden, dass der Halteabschnitt mit einer grösseren Breite als die Langlöcher ausgeführt wird. Unter einer Breite kann hierbei eine Ausdehnung quer zu einer jeweiligen Längsachse verstanden werden. Anders ausgedrückt kann der Halteabschnitt im montierten Zustand der Positionierhilfe beidseitig über das jeweilige Langloch hinausragen. Somit kann die Positionierhilfe in das jeweilige Langloch eingehängt oder eingehakt werden.

Um ein einfaches Einsetzen und Ausrichten der Positionierhilfe zu ermöglichen, kann der Halteabschnitt über einen vergleichsweise dünnen Hals mit dem Befestigungsabschnitt verbunden sein. Dabei kann der Hals leicht gebogen sein, sodass der Halteabschnitt schräg vom Befestigungsabschnitt absteht. Anders ausgedrückt kann sich der Halteabschnitt im Wesentlichen in einer Ebene erstrecken, die quer oder schräg zu einer Ebene verläuft, in der sich der Befestigungsabschnitt im Wesentlichen erstreckt.

Eine solche Positionierhilfe ermöglicht es, eine Mutter relativ zu einem Langloch der Hohlschiene zu positionieren, ohne dass hierzu die Hohlschiene, d. h. die (relativ schwere) Führungsschiene mit der daran befestigten Hohlschiene, und der Führungsschienenhalter relativ zueinander bewegt werden müssen. Dadurch kann die Montage der Führungsschiene schnell und komfortabel vonstatten gehen.

Zudem ist vorteilhaft, dass zum Einbringen und Positionieren der Mutter zusätzlich zu den Langlöchern keine weiteren, beispielsweise seitlichen Öffnungen in der Hohlschiene erforderlich sind, die die Stabilität der Hohlschiene beeinträchtigen könnten.

Ein zweiter Aspekt der Erfindung betrifft ein Positioniersystem für eine Aufzugsanlage. Das Positioniersystem umfasst eine Führungsschiene zum Führen einer Aufzugskabine. Die Führungsschiene ist als Hohlschiene ausgeformt, wobei die Hohlschiene zur Befestigung an einem Führungsschienenhalter eine Mehrzahl von in Längsrichtung der Hohlschiene hintereinander angeordneten Langlöchern aufweist. Ferner umfasst das Positioniersystem mindestens eine Positionierhilfe gemäss einer Ausführungsform des ersten Aspekts der Erfindung. Der Befestigungsabschnitt der Positionierhilfe ist so dimensioniert, dass er mitsamt der mindestens einen Mutter durch eines der Langlöcher hindurchgeführt und innerhalb der Hohlschiene bewegt werden kann. Der Halteabschnitt der Positionierhilfe ist breiter als das Langloch ausgeführt.

Ein dritter Aspekt der Erfindung betrifft ein Führungsschienensystem für eine Aufzugsanlage. Das Führungsschienensystem umfasst mindestens einen Führungsschienenhalter zum Verankern des Führungsschienensystems an einer Wand des Aufzugschachtes, mindestens eine Führungsschiene zum Führen einer Aufzugskabine sowie ein Positioniersystem gemäss einer Ausführungsform des zweiten Aspekts der Erfindung. Die Führungsschiene ist als Hohlschiene ausgeformt, wobei die Hohlschiene zur Befestigung an einem Führungsschienenhalter eine Mehrzahl von in Längsrichtung der Hohlschiene hintereinander angeordneten Langlöchern aufweist. Der Führungsschienenhalter und die Hohlschiene sind mittels mindestens einer Schraube, die in die mindestens eine Mutter der mindestens einen Positionierhilfe des Positioniersystems eingreift, miteinander verschraubt.

Ein vierter Aspekt der Erfindung betrifft eine Aufzugsanlage mit einem in einem Aufzugsschacht montierten Führungsschienensystem gemäss einer Ausführungsform des dritten Aspekts der Erfindung.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Gemäss einer Ausführungsform ist der Halteabschnitt über einen Hals an dem Befestigungsabschnitt befestigt. Dabei ist der Hals geknickt, sodass der Halteabschnitt in einer Richtung quer zu einer Ebene, in der sich der Befestigungsabschnitt erstreckt, d. h. in einem bestimmten schrägen Winkel, vom Befestigungsabschnitt absteht.

Ein Hals kann als ein Abschnitt mit einem im Vergleich zum Befestigungsabschnitt und/oder zum Halteabschnitt deutlich verringerten Querschnitt aufgefasst werden. Somit kann die Positionierhilfe bequem gehalten werden.

Gemäss einer bevorzugten Ausführungsform hat der Hals eine geringere Breite als das Langloch. Anders ausgedrückt kann die Positionierhilfe im montierten Zustand ein gewisses Spiel relativ zu dem Langloch in der Hohlschiene haben. Somit kann die Positionierhilfe mit geringem Kraftaufwand bewegt und präzise ausgerichtet werden. Hierzu kann ein Finger auf den Halteabschnitt drücken, um die Positionierhilfe an einer Position zu halten. Durch Verschieben des Fingers kann die Positionierhilfe so ausgerichtet werden, dass die Schraube in die Mutter geschraubt eingeführt werden kann.

Gemäss einer alternativen Ausführungsform ist eine Breite des Halses so gewählt, dass der Hals im Langloch einklemmbar ist. Anders ausgedrückt kann der Hals genauso breit wie das Langloch oder geringfügig breiter als das Langloch sein, sodass die Positionierhilfe im montierten Zustand nur mit einem gewissen Kraftaufwand bewegt werden kann. Seitliche Flanken des Halses werden somit im montierten Zustand gegen gegenüberliegende Flanken der Hohlschiene im Bereich der Langlöcher gepresst, sodass es durch Reibung zu einem Kraftschluss kommt, der die Positionierhilfe entgegen der Schwerkraft in dem Langloch festlegt. Dies hat den Vorteil, dass die Positionierhilfe eine einmal gefundene Position auch dann beibehält, wenn sie losgelassen wird. Somit kann etwa eine Schraube in die Mutter eingeschraubt werden, ohne dass gleichzeitig die Positionierhilfe in Position gehalten werden muss.

Je nach Ausgestaltung des Halses kann der Hals in einer weiteren alternativen Ausführungsform zur seitlichen Führung und/oder Ausrichtung der Positionierhilfe im Langloch dienen. Beispielsweise kann die Breite des Halses so gewählt sein, dass der Hals im montierten Zustand der Positionierhilfe mit einer gewissen Kraft gegen einen Rand des jeweiligen Langlochs gedrückt wird, die einer Schwerkraft der Positionierhilfe entgegenwirkt und so ein Verrutschen oder Herausfallen der Positionierhilfe verhindert, wenn die Positionierhilfe losgelassen wird. Ein Kontaktbereich zwischen dem Hals und dem Langloch, der sich insbesondere entlang des Langloches erstreckt, richtet dabei die Positionierhilfe parallel so aus, dass die Mutter zentral hinter den Langlöchern angeordnet ist. Sie kann sich dazu parallel zur Richtung des Langloches ausrichten. Dadurch lässt sich die Schraube einfach in die Mutter einführen.

Gemäss einer Ausführungsform ist der Hals quer zu seiner Längsrichtung federnd ausgeführt. Insbesondere kann der Hals in einer Richtung, die sich senkrecht zur Längsrichtung des Halses und innerhalb einer Haupterstreckungsebene des Halses erstreckt, elastisch nachgiebig ausgestaltet sein. Anders ausgedrückt kann der Hals ausgeführt sein, um im montierten Zustand der Positionierhilfe eine gewisse Federkraft auf die Ränder des jeweiligen Langlochs auszuüben. Beispielsweise kann der Hals hierzu ringförmig oder mit einer sonstigen geeigneten geometrischen Form ausgestaltet sein. Zusätzlich oder alternativ kann der Hals aus einem besonders elastischen Material gefertigt sein, das unter Umständen von einem Material des Befestigungsabschnitts und/oder des Halteabschnitts abweichen kann. Somit kann die Positionierhilfe gegen Verrutschen und/oder Herausfallen gesichert werden.

Gemäss einer Ausführungsform weist der Hals einen sich in seiner Längsrichtung erstreckenden Längsschlitz auf. Dadurch kann eine elastische Verformbarkeit des Halses quer zu seiner Längsrichtung mit geringem Fertigungsaufwand erhöht werden. Der Längsschlitz kann sich zumindest über Teile einer Gesamtlänge des Halses erstrecken, beispielsweise über mindestens 20 %, vorzugsweise mindestens 50 % der Gesamtlänge des Halses. Dabei kann der Längsschlitz an oder in der Nähe einer geometrischen Mitte bezogen auf die Gesamtlänge des Halses angeordnet sein.

Gemäss einer Ausführungsform sind der Befestigungsabschnitt, der Halteabschnitt und der Hals verschiedene Abschnitte ein und desselben Metallstreifens. Anders ausgedrückt können der Befestigungsabschnitt, der Halteabschnitt und der Hals jeweils integrale Bestandteile eines gemeinsamen Bauteils sein, wobei das Bauteil mithilfe eines einzelnen Metallstreifens erzeugt werden kann. Beispielsweise kann der Metallstreifen aus einem Blech ausgestanzt oder ausgeschnitten und anschliessend am Hals gebogen werden. Die Mutter kann kraft- und/oder stoffschlüssig mit dem Metallstreifen verbunden sein. Alternativ kann die Mutter als Gewindebohrung in dem Metallstreifen ausgeführt sein. Somit kann die Positionierhilfe kosteneffizient hergestellt werden.

Gemäss einer Ausführungsform ist der Befestigungsabschnitt breiter als das Langloch ausgeführt. Der Befestigungsabschnitt kann somit, nachdem er in ein Langloch eingeführt wurde, mit seinen seitlichen Rändern hinter Rändern der Hohlschiene, die an das Langloch angrenzen, zum Liegen kommen und sich an diesen abstützen. Anders ausgedrückt kann der Befestigungsabschnitt die Hohlschiene im Bereich der Ränder eines Langlochs hintergreifen und sich somit an der Hohlschiene abstützen. Somit kann der Befestigungsabschnitt zur Abstützung einer axialen Gewindekraft an der Hohlschiene dienen.

Gemäss einer Ausführungsform ist die mindestens eine Mutter in eine Aussparung des Befestigungsabschnitts eingepresst. Somit kann die Mutter mit geringem Fertigungsaufwand, beispielsweise ohne zusätzlichen Schweiss-, Löt- oder Klebeprozess, an dem Befestigungsabschnitt befestigt werden. Ausserdem können als Muttern einfache, standardmässig ausgeführte und kostengünstig herzustellende Bauteile eingesetzt werden.

Gemäss einer Ausführungsform sind mindestens zwei Muttern an dem Befestigungsabschnitt befestigt und in Längsrichtung des Befestigungsabschnitts hintereinander angeordnet. Somit kann eine sichere Verschraubung der Hohlschiene mit dem Führungsschienenhalter gewährleistet werden. Zudem kann im Vergleich zu einer Ausführungsform mit nur einer Mutter die Ausrichtung der Positionierhilfe relativ zu einer gegebenen Position eines Schraubenlochs im Führungsschienenhalter vereinfacht werden.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt Teile einer Aufzugsanlage mit einem Führungsschienensystem gemäss einem Ausführungsbeispiel der Erfindung.
Fig. 2 zeigt einen Abschnitt des Führungsschienensystems aus Fig. 1 in vergrösserter Darstellung.
Fig. 3 zeigt eine Positionierhilfe gemäss einem Ausführungsbeispiel der Erfindung.
Fig. 4 zeigt einen Abschnitt einer Positionierhilfe gemäss einem weiteren Ausführungsbeispiel der Erfindung.

Die Figuren sind lediglich schematisch und nicht massstabsgetreu. Gleiche Bezugszeichen bezeichnen in den verschiedenen Figuren gleiche oder gleichwirkende Merkmale.

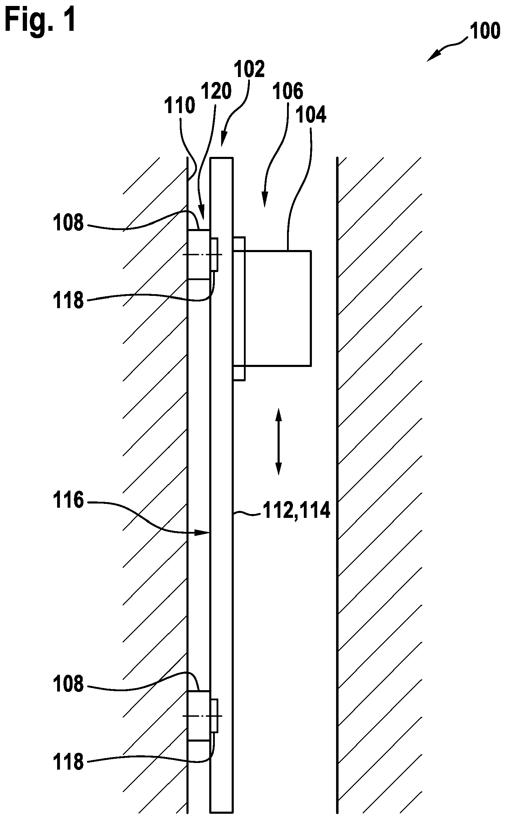

Fig. 1 zeigt einen Teilbereich einer Aufzugsanlage 100 mit einem Führungsschienensystem 102 zum Führen einer Aufzugskabine 104 durch einen Aufzugsschacht 106. Das Führungsschienensystem 102 umfasst mehrere Führungsschienenhalter 108, beispielsweise in Form von Befestigungswinkeln, die einerseits in einer Wand 110 des Aufzugsschachts 106 verankert sind, beispielsweise mit in die Wand 110 einbetonierten Profilschienen verschraubt sind, und andererseits jeweils mit einer Führungsschiene 112 verschraubt sind. Die Führungsschiene 112 führt die Aufzugskabine 104. Die Führungsschiene 112 ist als eine Hohlschiene 114 ausgeführt, die an einer der Wand 110 zugewandten Montageseite 116 eine Mehrzahl von Langlöchern (hier nicht sichtbar) aufweist. Die Hohlschiene 114 erstreckt sich in Längsrichtung der Führungsschiene 112. Die Führungsschienenhalter 108 sind jeweils mit der Hohlschiene 114 verschraubt. Hierzu wurden in der Hohlschiene 114 mittels mehrerer Positionierhilfen 118 Muttern (nicht gezeigt) geeignet positioniert. Die Positionierhilfen 118 und die Führungsschiene 112 sind als Komponenten eines Positioniersystems 120 des Führungsschienensystems 102 ausgeführt. Die Positionierhilfen 118 wurden jeweils über die zur Verschraubung dienenden Langlöcher an der Montageseite 116, d. h. über die Vorderseite der Hohlschiene 114, eingeführt. Das Führungsschienensystem 102 wird im Folgenden näher beschrieben.

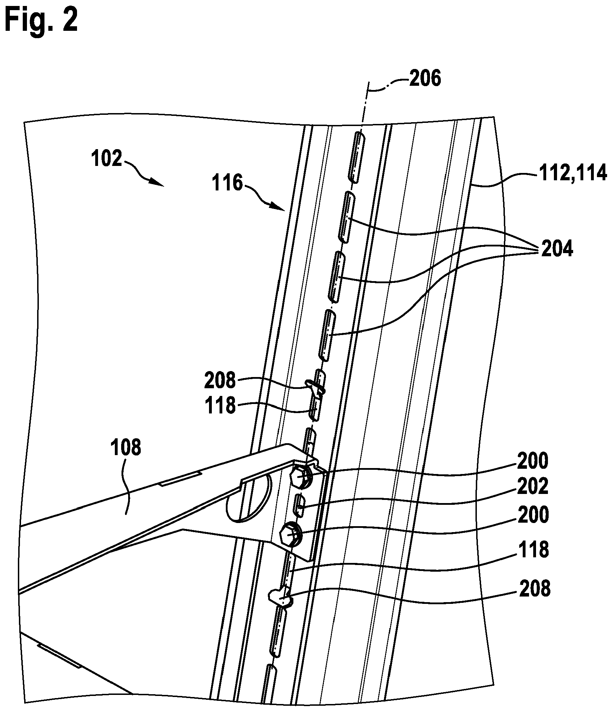

Fig. 2 zeigt einen vergrösserten Ausschnitt des Führungsschienensystems 102 aus Fig. 1, genauer eine Ansicht der Montageseite 116. Zu erkennen ist ein Führungsschienenhalter 108, der über zwei Schrauben 200 mit der Hohlschiene 114 verschraubt ist. Die Schrauben 200 sind jeweils durch ein Schraubenloch 202 im Führungsschienenhalter 108 geführt. Die Schraubenlöcher 202 können beispielsweise Langlöcher sein. Alternativ kann der Führungsschienenhalter 108 auch nur mit einer Schraube 200 mit der Hohlschiene 114 verschraubt sein.

Die Hohlschiene 114 weist an der Montageseite 116 eine Mehrzahl von Langlöchern 204 auf, die in Richtung einer Längsachse 206 der Hohlschiene 114 hintereinander angeordnet sind und deren jeweilige Längsachse parallel zur Längsachse 206 der Hohlschiene 114 ausgerichtet ist. Die Schrauben 200 sind jeweils in eine in der Hohlschiene 114 positionierte Mutter eingeschraubt. Die Muttern werden jeweils von einer Positionierhilfe 118 in der Hohlschiene 114 gehalten.

Die Positionierhilfen 118 wurden jeweils durch ein zumindest teilweise freiliegendes Langloch 204 oberhalb bzw. unterhalb des Führungsschienenhalters 108 eingeführt und so angeordnet, dass die Muttern jeweils einem Überlappungsbereich gegenüberliegen, in dem sich die Schraubenlöcher 202 und die Langlöcher 204 überlappen.

Zum Halten der Positionierhilfen 118, beispielweise mit Daumen und Zeigefinger, weist jede der Positionierhilfen 118 einen entsprechend geformten Halteabschnitt 208 auf. Der Halteabschnitt 208 ist gegenüber den Langlöchern 204 so verbreitert, dass er nicht durch die Langlöcher 204 hindurchpasst. Der Halteabschnitt 208 fungiert somit als eine Art Haken oder Anschlag, der ein Herausfallen der Positionierhilfe 118 aus dem Langloch 204 und eventuell ein Hineinfallen der Positionierhilfe 118 in die Hohlschiene 114 verhindert.

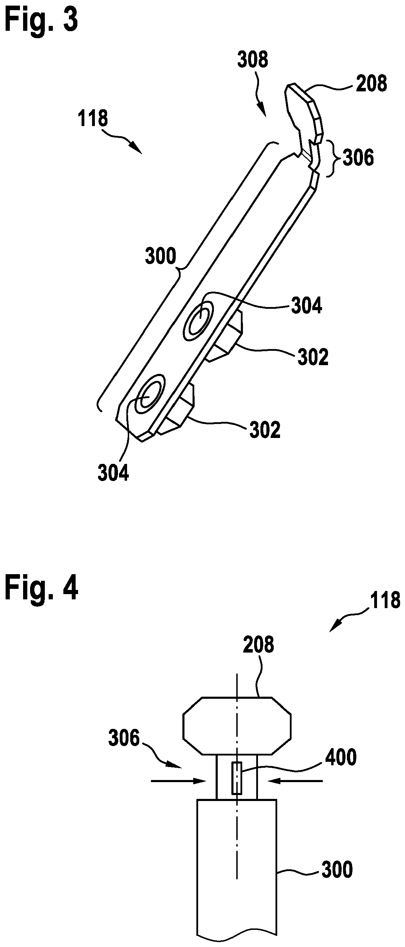

Fig. 3 zeigt eine der Positionierhilfen 118 aus Fig. 2 in vergrösserter Darstellung. Die Positionierhilfe 118 umfasst einen länglichen, hier streifenförmigen Befestigungsabschnitt 300, an dem zwei Muttern 302 befestigt sind. Der Befestigungsabschnitt 300 kann auch nur eine Mutter 302 oder auch mehr als zwei Muttern 302 aufweisen. Die Muttern 302 können in Längsrichtung des Befestigungsabschnitts 300 in einem gewissen Abstand hintereinander angeordnet sein. Beispielsweise kann es sich bei den Muttern 302 um Gewindeeinsätze handeln, die in entsprechende Aussparungen 304 im Befestigungsabschnitt 300 eingepresst sind. Es sind jedoch auch beliebige andere Befestigungsmethoden möglich.

Die Abmessungen des Befestigungsabschnitts 300, etwa dessen Breite und Länge, sind so gewählt, dass er zum einen einfach durch die Langlöcher 204 hindurchgeführt werden kann und zum anderen mit ausreichendem Bewegungsspielraum innerhalb der Hohlschiene 114 bewegt, beispielsweise in Längsrichtung der Hohlschiene 114 verschoben oder zumindest geringfügig verdreht werden kann. Die Breite des Befestigungsabschnitts 300 kann dabei grösser als die Breite der Langlöcher 204 sein, sodass der Befestigungsabschnitt 300 im montierten Zustand der Positionierhilfe 118 beidseitig über eine jeweilige Kontur der Langlöcher 204 hinausragt.

Der Halteabschnitt 208 ist an einem Ende des Befestigungsabschnitts 300 befestigt. Dabei kann der Halteabschnitt 208 über einen Hals 306 mit dem Befestigungsabschnitt 300 verbunden sein. Der Hals 306 kann deutlich schmaler als der Befestigungsabschnitt 300 und der Halteabschnitt 208 ausgeführt sein. Auch kann der Hals 306 schmaler als die Langlöcher 204 ausgeführt sein, um ein einfaches Verschieben der Positionierhilfe 118 in den Langlöchern 204 zu ermöglichen. Denkbar ist jedoch auch, dass der Hals 306 die gleiche (Nenn-)Breite wie die Langlöcher 204 oder eine geringfügig grössere Breite als die Langlöcher 204 hat, was ein Reiben oder Verkanten des Halses 306 in den Langlöchern 204 begünstigt. Ein solches Reiben oder Verkanten kann in gewissem Mass erwünscht sein, da es ein unbeabsichtigtes Verrutschen der Positionierhilfe 118 beim Loslassen des Halteabschnitts 208 verhindert.

Zusätzlich kann die Positionierhilfe 118 am Hals 306 leicht gebogen sein, sodass der Halteabschnitt 208 leicht vom Befestigungsabschnitt 300 absteht und somit aus der Hohlschiene 114 herausragt.

Der Befestigungsabschnitt 300, der Hals 306 und der Halteabschnitt 208 können beispielsweise verschiedene Abschnitte eines Metallstreifens 308 sein.

Der Hals 306 kann optional quer zu seiner Längsrichtung federnd ausgeführt sein. Wie in Fig. 4 gezeigt, kann der Hals 306 hierzu beispielsweise mit einem Längsschlitz 400 ausgeführt sein, der eine elastische Verformbarkeit des Halses 306 quer zu seiner Längsrichtung erhöht (angedeutet mit zwei Pfeilen). Die Längsrichtung des Halses 306 ist mit einer Strichpunktlinie angedeutet.

Die Montage der Führungsschiene 112 an dem Führungsschienenhalter 108 kann die folgenden grundsätzlichen Schritte umfassen. Dabei ist die Hohlschiene 114 gegenüber dem Führungsschienenhalter 108 so vorpositioniert, dass sich ein Schraubenloch 202 des Führungsschienenhalters 108 und ein Langloch 204 der Hohlschiene 114 in einem Überlappungsbereich überlappen.

In einem ersten Schritt wird der Befestigungsabschnitt 300 der Positionierhilfe 118 mittels des Halteabschnitts 208 durch ein zumindest teilweise freiliegendes Langloch 204 der Hohlschiene 114 hindurchgeführt und innerhalb der Hohlschiene 114 so ausgerichtet, dass die am Befestigungsabschnitt 300 befestigte Mutter 302 (oder eine der daran befestigten Muttern 302) dem Überlappungsbereich gegenüberliegt.

In einem zweiten Schritt werden der Führungsschienenhalter 108 und die Hohlschiene 114 durch Einschrauben einer Schraube 200 in die Mutter 302 miteinander verspannt.

Der Positionierhilfe 118 kann beispielsweise mit einer schmalen Seite des Befestigungsabschnitts 300 voran in das Langloch 204 eingeführt werden und dann passend eingedreht werden. Anschliessend kann die Mutter 302 durch Verschieben der Positionierhilfe 118 in Längsrichtung des Langlochs 204 in Position gebracht werden.

Abschliessend wird darauf hingewiesen, dass Begriffe wie "aufweisend", "umfassend" etc. keine anderen Elemente oder Schritte ausschliessen und Begriffe wie "eine" oder "ein" keine Vielzahl ausschliessen. Ferner wird darauf hingewiesen, dass Merkmale oder Schritte, die mit Verweis auf eines der obigen Ausführungsbeispiele beschrieben worden sind, auch in Kombination mit anderen Merkmalen oder Schritten anderer der obigen Ausführungsbeispiele verwendet werden können. Bezugszeichen in den Ansprüchen sind nicht als Einschränkung anzusehen.

## Patentansprüche

1. Positioniersystem (120) für eine Aufzugsanlage (100), wobei das Positioniersystem (120) umfasst:
eine Führungsschiene (112) zum Führen einer Aufzugskabine (104), wobei die Führungsschiene (112) als Hohlschiene (114) ausgeformt ist, wobei die Hohlschiene (114) zur Befestigung an einem Führungsschienenhalter (108) eine Mehrzahl von Langlöchern (204) aufweist; und
mindestens eine Positionierhilfe (118) zum Positionieren einer Mutter (302) an der Führungsschiene (112) der Aufzugsanlage (100), wobei die Hohlschiene (114) zur Befestigung an einem Führungsschienenhalter (108) eine Mehrzahl von in Längsrichtung der Hohlschiene (114) hintereinander angeordneten Langlöchern (204) aufweist, wobei die Positionierhilfe (118) umfasst:
einen länglichen Befestigungsabschnitt (300), an dem mindestens eine Mutter (302) befestigt ist und der so dimensioniert ist, dass er mitsamt der mindestens einen Mutter (302) durch eines der Langlöcher (204) hindurchgeführt und innerhalb der Hohlschiene (114) bewegt werden kann; und
einen Halteabschnitt (208) zum Halten des Befestigungsabschnitts (300), wobei der Halteabschnitt (208) an einem Ende des Befestigungsabschnitts (300) befestigt ist und breiter als das Langloch (204) ausgeführt ist,
wobei der Befestigungsabschnitt (300) der Positionierhilfe (118) so dimensioniert ist, dass er mitsamt der mindestens einen Mutter (302) durch eines der Langlöcher (204) hindurchgeführt und innerhalb der Hohlschiene (114) bewegt werden kann, und wobei der Halteabschnitt (208) der Positionierhilfe (118) breiter als das Langloch (204) ausgeführt ist.

2. Positioniersystem (120) nach Anspruch 1 **dadurch gekennzeichnet, dass** die Mehrzahl von Langlöchern (204) in Längsrichtung der Hohlschiene (114) hintereinander angeordneten sind.

3. Positioniersystem (120) nach Anspruch 1 oder 2,
wobei der Halteabschnitt (208) über einen Hals (306) an dem Befestigungsabschnitt (300) befestigt ist;
wobei der Hals (306) geknickt ist, sodass der Halteabschnitt (208) vom Befestigungsabschnitt (300) in einer Richtung quer zu einer Ebene, in der sich der Befestigungsabschnitt (300) erstreckt, absteht.

4. Positioniersystem (120) nach Anspruch 3,
wobei der Hals (306) quer zu seiner Längsrichtung federnd ausgeführt ist.

5. Positioniersystem (120) nach Anspruch 3 oder 4,
wobei der Hals (306) einen sich in seiner Längsrichtung erstreckenden Längsschlitz (400) aufweist.

6. Positioniersystem (120) nach einem der Ansprüche 3 bis 5,
wobei der Befestigungsabschnitt (300), der Halteabschnitt (208) und der Hals (306) verschiedene Abschnitte eines Metallstreifens (308) sind.

7. Positioniersystem (120) nach einem der vorhergehenden Ansprüche,
wobei die mindestens eine Mutter (302) in eine Aussparung (304) des Befestigungsabschnitts (300) eingepresst ist.

8. Positioniersystem (120) nach einem der vorhergehenden Ansprüche,
wobei mindestens zwei Muttern (302) an dem Befestigungsabschnitt (300) befestigt sind und in Längsrichtung des Befestigungsabschnitts (300) hintereinander angeordnet sind.

9. Positioniersystem (120) nach einem der vorhergehenden Ansprüche ,
wobei der Halteabschnitt (208) über einen Hals (306) an dem Befestigungsabschnitt (300) befestigt ist;
wobei der Hals (306) eine geringere Breite als das Langloch (204) hat.

10. Positioniersystem (120) nach einem der Ansprüche 1 bis 8,
wobei der Halteabschnitt (208) über einen Hals (306) an dem Befestigungsabschnitt (300) befestigt ist;
wobei eine Breite des Halses (306) so gewählt ist, dass der Hals (306) im Langloch (204) einklemmbar ist.

11. Positioniersystem (120) nach einem der vorhergehenden Ansprüche ,
wobei der Befestigungsabschnitt (300) breiter als das Langloch (204) ausgeführt ist.

12. Führungsschienensystem (102) für eine Aufzugsanlage (100), wobei das Führungsschienensystem (102) umfasst:
mindestens einen Führungsschienenhalter (108) zum Verankern des Führungsschienensystems (102) an einer Wand (110) des Aufzugschachtes (106);
mindestens eine Führungsschiene (112) zum Führen einer Aufzugskabine (104), wobei die Führungsschiene (112) als Hohlschiene (114) ausgeformt ist, wobei die Hohlschiene (114) zur Befestigung an dem Führungsschienenhalter (108) eine Mehrzahl von in Längsrichtung der Hohlschiene (114) hintereinander angeordneten Langlöchern (204) aufweist;
ein Positioniersystem (120) einem der vorhergehenden Ansprüche, wobei der Führungsschienenhalter (108) und die Hohlschiene (114) mittels mindestens einer Schraube (200), die in die mindestens eine Mutter (302) der mindestens einen Positionierhilfe (118) des Positioniersystems (120) eingreift, miteinander verschraubt sind.

13. Aufzugsanlage (100), umfassend ein Führungsschienensystem (102) nach Anspruch 12, wobei das Führungsschienensystem (102) in einem Aufzugsschacht (106) der Aufzugsanlage (100) montiert ist.

## Claims

1. A positioning system (120) for an elevator system (100), the positioning system (120) comprising:
a guide rail (112) for guiding an elevator car (104), the guide rail (112) being formed as a hollow rail (114), the hollow rail (114) having a plurality of elongated holes (204) in order to be fastened to a guide rail holder (108); and
at least one positioning aid (118) for positioning a nut (302) on the guide rail (112) of the elevator system (100), the hollow rail (114) having a plurality of elongated holes (204) arranged one behind the other in the longitudinal direction of the hollow rail (114) in order to be fastened to a guide rail holder (108), the positioning aid (118) comprising:
an elongate fastening portion (300) to which at least one nut (302) is fastened and which is dimensioned such that it can be passed through one of the elongated holes (204) together with the at least one nut (302) and moved within the hollow rail (114); and
a holding portion (208) for holding the fastening portion (300), the holding portion (208) being fastened to one end of the fastening portion (300) and being configured to be wider than the elongated hole (204),
the fastening portion (300) of the positioning aid (118) being dimensioned such that it can be passed through one of the elongated holes (204) together with the at least one nut (302) and moved within the hollow rail (114), and the holding portion (208) of the positioning aid (118) being configured to be wider than the elongated hole (204).

2. The positioning system (120) according to claim 1, **characterized in that** the plurality of elongated holes (204) is arranged one behind the other in the longitudinal direction of the hollow rail (114).

3. The positioning system (120) according to claim 1 or 2,
the holding portion (208) being fastened to the fastening portion (300) via a neck (306);
the neck (306) being kinked such that the holding portion (208) protrudes from the fastening portion (300) in a direction transverse to a plane in which the fastening portion (300) extends.

4. The positioning system (120) according to claim 3,
the neck (306) being configured to be resilient transversely to the longitudinal direction thereof.

5. The positioning system (120) according to claim 3 or 4,
the neck (306) having a longitudinal slot (400) extending in the longitudinal direction thereof.

6. The positioning system (120) according to one of claims 3 to 5,
the fastening portion (300), the holding portion (208), and the neck (306) being different portions of a metal strip (308).

7. The positioning system (120) according to one of the preceding claims,
the at least one nut (302) being pressed into a recess (304) in the fastening portion (300).

8. The positioning system (120) according to one of the preceding claims,
at least two nuts (302) being fastened to the fastening portion (300) and being arranged one behind the other in the longitudinal direction of the fastening portion (300).

9. The positioning system (120) according to one of the preceding claims,
the holding portion (208) being fastened to the fastening portion (300) via a neck (306);
the neck (306) having a smaller width than the elongated hole (204).

10. The positioning system (120) according to one of claims 1 to 8,
the holding portion (208) being fastened to the fastening portion (300) via a neck (306);
a width of the neck (306) being selected such that the neck (306) can be clamped in the elongated hole (204).

11. The positioning system (120) according to one of the preceding claims,
the fastening portion (300) being configured to be wider than the elongated hole (204).

12. A guide rail system (102) for an elevator system (100), the guide rail system (102) comprising:
at least one guide rail holder (108) for anchoring the guide rail system (102) to a wall (110) of the elevator shaft (106);
at least one guide rail (112) for guiding an elevator car (104), the guide rail (112) being formed as a hollow rail (114), the hollow rail (114) having a plurality of elongated holes (204) arranged one behind the other in order to be fastened to the guide rail holder (108) in the longitudinal direction of the hollow rail (114);
a positioning system (120) according to one of the preceding claims, the guide rail holder (108) and the hollow rail (114) being screwed together by means of at least one screw (200) which engages in the at least one nut (302) of the at least one positioning aid (118) of the positioning system (120).

13. An elevator system (100) comprising a guide rail system (102) according to claim 12, the guide rail system (102) being installed in an elevator shaft (106) of the elevator system (100).

## Revendications

1. Système de positionnement (120) pour un système d'ascenseur (100), le système de positionnement (120) comprenant :
un rail de guidage (112) pour guider une cabine d'ascenseur (104), le rail de guidage (112) étant formé comme un rail creux (114), le rail creux (114) ayant une pluralité de trous oblongs (204) afin d'être fixé à un support de rail de guidage (108) ; et
au moins une aide au positionnement (118) pour positionner un écrou (302) sur le rail de guidage (112) du système d'ascenseur (100), le rail creux (114) ayant une pluralité de trous oblongs (204) disposés l'un derrière l'autre dans la direction longitudinale du rail creux (114) afin d'être fixés à un support de rail de guidage (108), l'aide au positionnement (118) comprenant :
une partie de fixation allongée (300) à laquelle est fixé au moins un écrou (302) et qui est dimensionnée de manière à pouvoir passer à travers l'un des trous oblongs (204) avec au moins un écrou (302) et se déplacer à l'intérieur du rail creux (114) ; et
une partie de maintien (208) pour maintenir la partie de fixation (300), la partie de maintien (208) étant fixée à une extrémité de la partie de fixation (300) et étant configurée pour être plus large que le trou oblong (204),
la partie de fixation (300) de l'aide au positionnement (118) étant dimensionnée de manière à pouvoir être passée à travers l'un des trous oblongs (204) avec au moins un écrou (302) et déplacée à l'intérieur du rail creux (114), et la partie de maintien (208) de l'aide au positionnement (118) étant configurée pour être plus large que le trou oblong (204), la partie de maintien (208) de l'aide au positionnement (118) étant configurée pour être plus large que le trou oblong (204).

2. Système de positionnement (120) selon la revendication 1, **caractérisé en ce que** la pluralité de trous oblongs (204) est disposée l'une derrière l'autre dans la direction longitudinale du rail creux (114).

3. Système de positionnement (120) selon la revendication 1 ou 2,
la partie de maintien (208) est fixée à la partie de fixation (300) par l'intermédiaire d'un col (306) ;
le col (306) étant plié de telle sorte que la partie de maintien (208) dépasse de la partie de fixation (300) dans une direction transversale à un plan dans lequel s'étend la partie de fixation (300).

4. Système de positionnement (120) selon la revendication 3,
le col (306) étant configuré pour être élastique transversalement à sa direction longitudinale.

5. Système de positionnement (120) selon la revendication 3 ou 4,
le col (306) comporte une fente longitudinale (400) s'étendant dans sa direction longitudinale.

6. Système de positionnement (120) selon l'une des revendications 3 à 5,
la partie de fixation (300), la partie de maintien (208) et le col (306) étant des parties différentes d'une bande métallique (308).

7. Système de positionnement (120) selon l'une des revendications précédentes,
le au moins un écrou (302) étant enfoncé dans une niche (304) de la partie de fixation (300).

8. Système de positionnement (120) selon l'une des revendications précédentes,
au moins deux écrous (302) étant fixés sur la partie de fixation (300) et étant disposés l'un derrière l'autre dans la direction longitudinale de la partie de fixation (300).

9. Système de positionnement (120) selon l'une des revendications précédentes,
la partie de maintien (208) étant fixée à la partie de fixation (300) par l'intermédiaire d'un col (306) ;
le col (306) ayant une largeur inférieure à celle du trou oblong (204).

10. Système de positionnement (120) selon l'une des revendications 1 à 8,
la partie de maintien (208) étant fixée à la partie de fixation (300) par l'intermédiaire d'un col (306) ;
la largeur du col (306) est choisie de manière à ce que le col (306) puisse être serré dans le trou oblong (204).

11. Système de positionnement (120) selon l'une des revendications précédentes,
la partie de fixation (300) étant configurée pour être plus large que le trou oblong (204).

12. Système de rail de guidage (102) pour un système d'ascenseur (100), le système de rail de guidage (102) comprenant :
au moins un support de rail de guidage (108) pour ancrer le système de rail de guidage (102) à une paroi (110) de la cabine d'ascenseur (106) ;
au moins un rail de guidage (112) pour guider une cabine d'ascenseur (104), le rail de guidage (112) étant formé d'un rail creux (114), le rail creux (114) ayant une pluralité de trous oblongs (204) disposés l'un derrière l'autre afin d'être fixés au support de rail de guidage (108) dans la direction longitudinale du rail creux (114) ;
une système de positionnement (120) selon l'une des revendications précédentes, le support de rail de guidage (108) et le rail creux (114) étant vissés l'un à l'autre au moyen d'au moins une vis (200) qui s'engage dans le au moins un écrou (302) du au moins un auxiliaire de positionnement (118) du système de positionnement (120).

13. Système d'ascenseur (100) comprenant un système de rail de guidage (102) selon la revendication 12, le système de rail de guidage (102) étant installé dans une cabine d'ascenseur (106) du système d'ascenseur (100).
